# EUROPEAN PATENT APPLICATION

(11) **EP 1 320 066 A2**
(43) Date of publication of application: **18.06.2003**
(21) Application number: 02022576.9
(22) Date of filing: 08.10.2002
(51) Int. Cl.: G06K 19/08

(54) **Card for multi-purpose using**

(30) Priority: 17.12.2001 US 15571
(71) Applicant: BENRUS CORP., Yunghe City, Taipei, Taiwan 234 (TW)
(72) Inventor: Cheung, Yau-Sheung, Yunghe City, Taipei, Taiwan 234 (TW)
(74) Representative: Kador & Partner

(57) **Abstract**

The present invention discloses a novel card for multi-purpose using, and more particularly, a card suitable for utilizing in a magnetic stripe card reader, an IC card reader and an optical driver to read out the data. The thickness (0.8mm) of the card corresponds with to the specification of the ISO 7816. The card comprises a reading area of an optical disc (45), a magnetic stripe (47) and an IC chip (49), and can be placed on a casing plate with a thickness of 0.4mm so that the card for multi-purpose using combines the functions of a conventional dual mode (magnetic stripe/IC chip) card and a conventional optical disc, so as to achieve advantages such as convenience for magnetic stripe and IC chip reading and larger memory capacity asscessing.

## Description

### BACKGROUND OF THE INVENTION

### 1. Field of the Invention

The present invention generally relates to a multi-functional card, and more particularly, to a card suitable for utilizing in a magnetic stripe card reader, an IC card reader, and an optical driver. Such card contains multi-functions of a magnetic stripe card, an IC card and an optical disc, thereby improving the convenience, memory capacity, security, and functionality.

### 2. Description of the Prior Art

Rapidly towards an information community, recently people have already entered a plastic card era. Every one holds, in his wallet, plenty of cards such as magnetic stripe cards and IC cards for finance management, identification, security, medical treatment and entrance guard purpose.

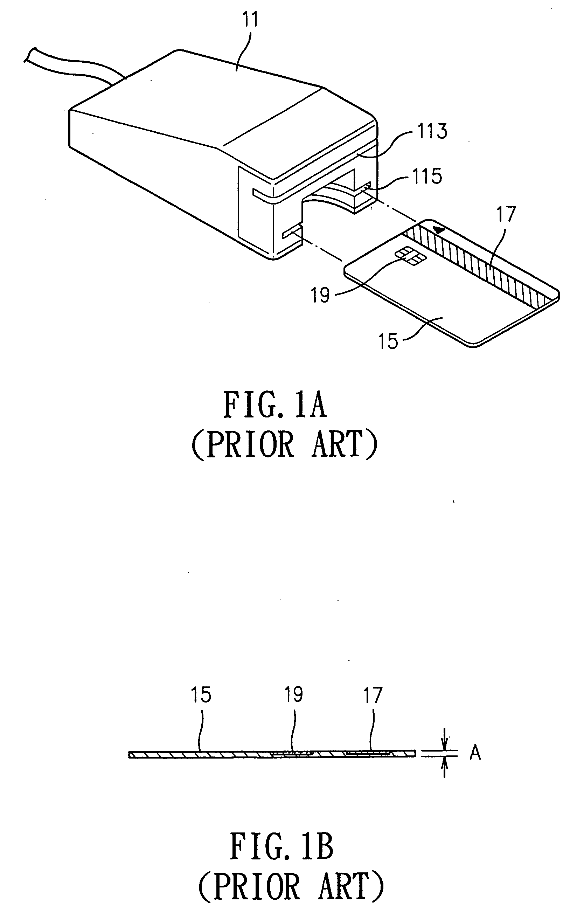

Please refer to FIG. 1A and FIG. 1B, which represent a three-dimensional view and a cross-sectional view of a dual mode (IC chip/magnetic stripe) card, respectively. The dual mode card 15 comprises a magnetic stripe 17 and an IC chip 19 formed on a plastic card according to International Standard ISO 7816 (85.6mm × 53.98mm × 0.8mm). "A" represents the thickness. The data stored in the magnetic stripe 17 or the IC chip 19 of the dual mode card 15 can be read through a wiping slot 113 or a socket 115 of a card reader 11.

The dual mode card 15 is convenient for its small size and portability. However, a magnetic stripe only has a memory capacity of 1.2K bytes and an IC chip on a conventional IC card only has a memory capacity of 250K bytes. It is obvious that such a dual mode card is limited in its memory size and is insufficient for the modem applications.

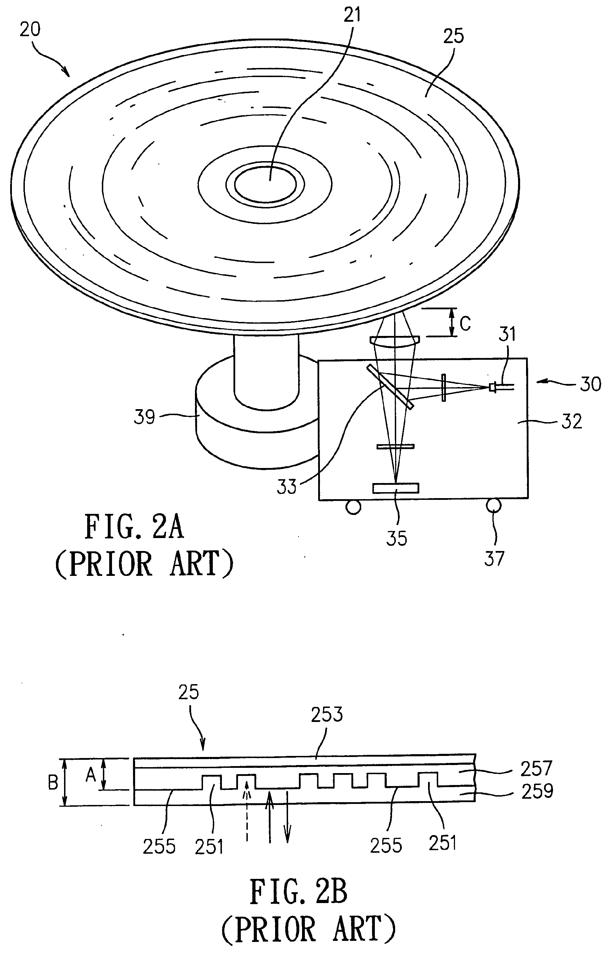

Please refer to FIG. 2A and FIG. 2B, which represent a three-dimensional view and a cross-sectional view of a conventional optical disc, respectively. According to Compact Disc Digital Audio Standard introduced by Philips and Sony, commonly known as "the ***Red Book,"*** and Compact Disc Recordable (CD-R) Standard introduced by Philips and Sony, commonly known as "the ***Orange Book,*** Part II", the optical disc 20 has a diameter of 120mm (or 80mm) and a thickness of 1.2mm. "B" represents the thickness. In addition, there is provided an aperture 21 in the center of the optical disc 20. Around the aperture 21 is a reading zone 25, comprising a storage medium 257 sandwiched between a transparent substrate 259 and a passive layer 253. The data such as audio data, video data and large software systems can be digitally processed as 0's and 1's. Those of ordinary skill in the art are readily aware that the storage medium 257 contain areas of high reflectivity (land) 255 and low reflectivity (pit) 251. When read with a laser, a transition from land to pit or from pit to land represents a "1", and all other areas represents a "0". When one wants to read the data stored in the optical disc 20, all he has to do is insert the optical disc 20 into an optical driver 30. A motor 39 in the optical driver 30 drives the optical disc 20 via the aperture 21. Then, the stored data can be read at a distance "C" between the storage medium 257 and the optical head 32 by using a laser 31 accompanied with a splitter 33, a detector 35, and a transmission device 37.

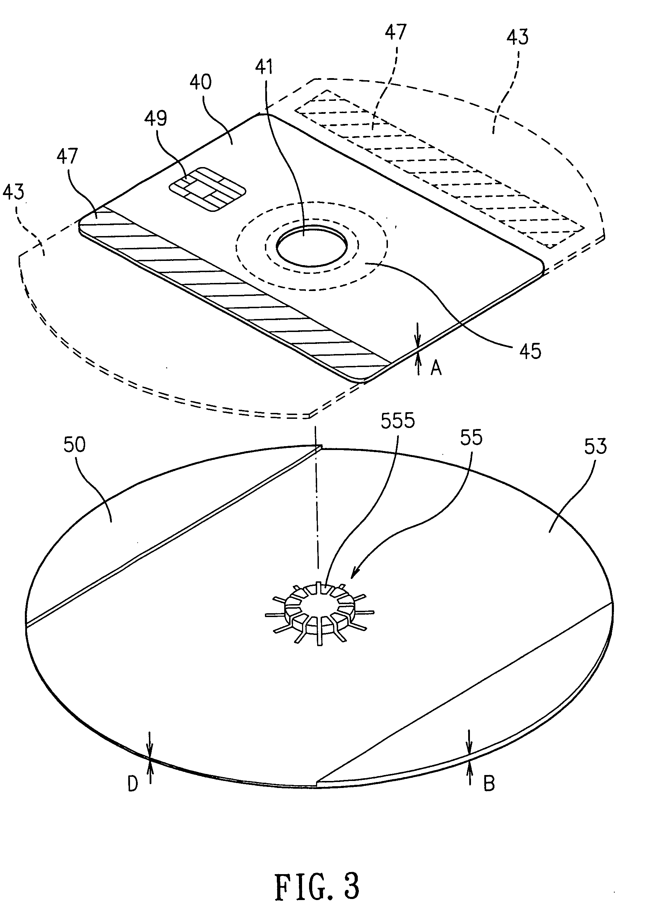

Conventionally, the optical disc 20 includes memory capacity of 650M bytes, which is more suitable for large software system than a dual mode card 15 having memory capacity of 250K bytes. However, the diameter of such an optical disc is 120mm and is not as portable as the dual card 15. Therefore, developing a card-shaped compact disc with memory capacity of 50M bytes would be encouraging. Examples are seen in US Pat. No. 6,016,298, entitled "Calling card" (Adivan High Tech AG, Wangen, CH) and in R.O.C. (Taiwan) Pat. No. 374375, entitled "Card-shaped compact disc" (RITEK Corp., TW), as denoted by the device 40 in FIG. 3.

Even though the card-shaped compact disc is convenient for its portability like IC cards and magnetic stripe cards. However, the card-shaped compact disc has a thickness of 1.2mm (B), while the dual mode card has a thickness of 0.8mm (A), resulting in a difference of 0.4mm. Therefore, there is technical difficulty with combining the both advantages of the card-shaped compact disc and the dual mode card; such as convenience for either magnetic stripe or IC chip reading and larger memory capacity accessing.

For example, if a thickness of 1.2mm (B) is chosen, it is impossible to perform magnetic stripe and IC chip reading in a conventional card reader 11, and thus to read out the recorded data from the magnetic stripe 17 and the IC chip 19. On the contrary, if a thickness of 0.8mm (A) is chosen, it is impossible for the detector 35 to precisely determine the 0's or 1's stored in the storage medium 257 when a card is inserted into the optical driver 30, because the distance between the storage medium 257 and the optical head 32 is smaller than "C". Based on the theoretical analysis, the depth of the pit 251 is one fourth (1/4) of the wavelength of the laser 31. The distance difference allowed is no more than 0.1mm; otherwise, errors in focusing and tracking may occur and lead to failure in reading data from the optical disc.

Therefore, there is need in providing a novel card for multi-purpose using, combining the functions of a conventional dual mode (magnetic stripe/IC chip) card and a conventional optical disc, so as to achieve advantages such as convenience for either magnetic stripe or IC chip reading and larger memory capacity accessing.

### SUMMARY OF THE INVENTION

It is the primary object of the present invention to provide a card for multi-purpose using, employing the thickness of a dual mode (magnetic stripe/IC chip) card so as to comprises a reading zone, a magnetic stripe, and an IC chip so that the card combines the functions of a conventional dual mode (magnetic stripe/IC chip) card and a conventional optical disc so as to achieve advantages such as convenience for either magnetic stripe or IC chip reading and larger memory capacity accessing.

It is another object of the present invention to provide a card for multi-purpose using, employing simplified structure variation so that the card combines the functions of an IC card and an optical disc to simplify the fabrication process.

It is still another object of the present invention to provide a card for multi-purpose using, in which the casing plate fits in with the reading zone of the card so that the reading zone is prevented from being contaminated.

It is still another object of the present invention to provide a card for multi-purpose using, characterized in that a card thin film with embossed patterns thereon is attached to the top surface of a card such that various embossed patterns can be formed on the surface of the card without causing any damage.

It is still another object of the present invention to provide a card for multi-purpose using, characterized in that an aperture is disposed off-center on a card such that the card for multi-purpose using is suitable for use in a slot-in card reader that can be prevented from being stuck with the gear drive of the card reading device.

In order to achieve the foregoing objects, the present invention provides a card for multi-purpose using, comprising: a card, comprising at least one reading zone, with a thickness making it able to pass in and out of a card reader; a casing plate, comprising two convex platforms on each side for positioning said card; wherein said casing plate with said positioned card is able to be inserted into an optical driver.

The present invention also provides a card for multi-purpose using, comprising: a card, comprising at least one reading zone; a card thin film attached to one surface of said card, wherein the sum of the thickness of said card and the thickness of said card thin film makes said card with said card thin film able to pass in and out of a card reader; and a casing plate, comprising a loading zone for loading said card with two convex platforms on each side for positioning said card; wherein said casing plate with said positioned card with said card thin film attached thereto is able to be inserted into an optical drive.

The present invention also provides a card for multi-purpose using, comprising: a card, comprising at least one reading zone and an positioning aperture disposed off-center; and a casing plate, comprising a loading zone for positioning said card; wherein the thickness of said casing plate with said positioned card conforms to the Red Book and the Orange book.

Other and further features, advantages and benefits of the invention will become apparent in the following description taken in conjunction with the following drawings. It is to be understood that the foregoing general description and following detailed description are exemplary and explanatory but are not to be restrictive of the invention. The accompanying drawings are incorporated in and constitute a part of this application and, together with the description, serve to explain the principles of the invention in general terms. Like numerals refer to like parts throughout the disclosure.

### BRIEF DESCRIPTION OF THE DRAWINGS

The objects, spirits and advantages of the preferred embodiments of the present invention will be readily understood by the accompanying drawings and detailed descriptions, wherein:
FIG. 1A and FIG. 1B represents a three-dimensional view and a cross-sectional view of a dual mode (IC chip/magnetic stripe) card, respectively, in accordance with the prior art;
FIG. 2A and FIG. 2B represent a three-dimensional view and a cross-sectional view of a conventional optical disc, respectively, in accordance with the prior art;
FIG. 3 is a detailed three-dimensional view showing the structure of a card for multi-purpose using in accordance with one embodiment of the present invention;
FIG. 4 is a cross-sectional view showing the structure of a card for multi-purpose using as shown in FIG. 3 in accordance with one embodiment of the present invention;
FIG. 5 is a three-dimensional view showing the reading process of a card for multi-purpose using as shown in FIG. 3 in accordance with one embodiment of the present invention;
FIG. 6A and FIG. 6B represent a three-dimensional view and a cross-sectional view showing the structure of a card for multi-purpose using in accordance with another embodiment of the present invention;
FIG. 7 is a schematic cross-sectional view showing the method for placing a card as shown in FIG. 6A in accordance with the present invention;
FIG. 8 is an exploded view showing the structure of a card for multi-purpose using in accordance with another embodiment of the present invention;
FIG. 9 is a three-dimensional view showing the structure of a card for multi-purpose using in FIG. 8;
FIG. 10 is an exploded view showing the structure of a card for multi-purpose using in accordance with another embodiment of the present invention;
FIG. 11 is an exploded view showing the structure of a card for multi-purpose using in accordance with another embodiment of the present invention;
FIG. 12 is a three-dimensional view showing the structure of a card for multi-purpose using in FIG. 11;
FIG. 13 is an exploded view showing the structure of a card for multi-purpose using in accordance with another embodiment of the present invention;
FIG. 14 is a cross-sectional view showing the structure of a card for multi-purpose using in FIG. 13; and
FIG. 15 is an exploded view showing the structure of a card for multi-purpose using in accordance with another embodiment of the present invention.

### DETAILED DESCRIPTION OF THE INVENTION

The present invention providing a card for multi-purpose using, combining the functions of a conventional dual mode (magnetic stripe/IC chip) card and a conventional optical disc so as to achieve advantages such as convenience for both magnetic stripe swiping and IC chip accessing and large memory capacity, can be exemplified by the preferred embodiments as described hereinafter.

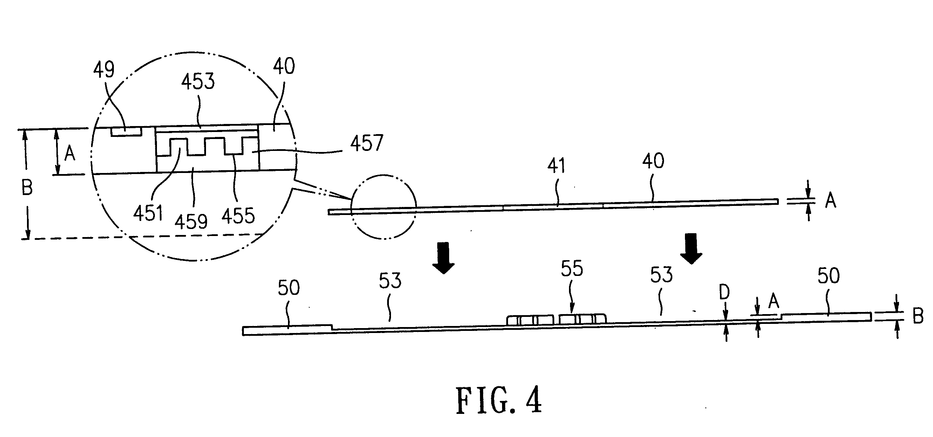

To start with, please refer to FIG. 3 and FIG. 4, which represent a detailed three-dimensional view and a cross-sectional view showing the structure of a card for multi-purpose using in accordance with one embodiment of the present invention. As shown in the drawings, the card according to the present invention comprises: a card 40 and a casing plate 50. The card 40 comprises at least one reading zone such as a magnetic strip 47, an IC chip 49 and a reading area of an optical disc 45 with a thickness of 0.8mm according to International Standard ISO 7816 (A: 0.76mm ∼ 0.82mm). Therefore, such a card 40 is able to be read by performing magnetic stripe swiping and/or IC chip accessing in a card reader. There is also provided an aperture 41 in the center of the card 40. Around the aperture 41 is the reading area 45, comprising a storage medium 457 sandwiched between a transparent substrate 459 and a passive layer 453. On the storage medium 457, there are also pits 451 and lands 455. What is different from a conventional optical disc is that the transparent substrate 459 is thinner so that the card 40 can conform to the required thickness of 0.8mm.

Furthermore, the casing plate 50 comprises a transparent loading zone 53 for positioning the card 40. The thickness of the transparent loading zone 53 is 0.4mm (D = B-A). In the center of the transparent loading zone 53, there is a positioning member 55 corresponding to the aperture 41 of the card 40. The positioning member 55 has a smooth top surface or a plurality of tooth-shaped units 555 so as to fit in with the aperture 41 of the card 40. Therefore, the card 40 can be stored fixedly in the transparent loading zone 53 of the casing plate 50. When the card 40 is superimposed upon the transparent loading zone 53, the thickness as a whole is 1.2mm that conforms to Compact Disc Digital Audio Standard described as "the ***Red Book,***" and Compact Disc Recordable (CD-R) Standard described as "the ***Orange Book,*** Part II". Associated with the manner, such card can be inserted into and accessed by a conventional optical driver. Moreover, the casing plate 50 can prevent the reading area 45 from being contaminated.

The tooth-shaped units 555 on the top surface of the positioning member 55 can not only fixedly position the card 40 but also helpful to take out the card 40. When someone wants to take the card 40 out from the casing plate 50, he only has to press the tooth-shaped units 555 and the card 40 will flip out, like an optical disc in a disc storage case.

According to the preferred embodiment, the card 40 is a rectangular one. However, it can also be an oval-shaped card with two additional arc-shaped wings 43. In other words, the card 40 and the casing plate 50 can be designed to be rectangular, oval-shaped, circular, annular etc. the magnetic stripe 47, the IC chip 49 and the reading area 45 can designed to be fabricated on the same side or on opposed sides of the card 40.

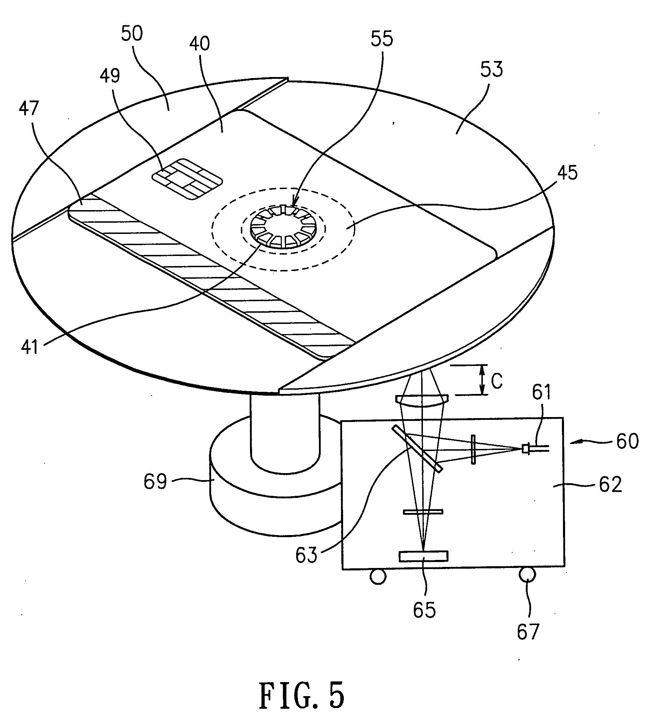

Please further refer to FIG. 5, which a three-dimensional view showing the reading process of a card for multi-purpose using as shown in FIG. 3 in accordance with one embodiment of the present invention. As shown in the drawing, when one wants to read the data stored in the reading area 45 of the card 40, all he has to do is position the card 40 onto the loading zone 53 of the casing plate 50, and then insert the card as a whole into an optical driver 60. A motor 69 in the optical driver 60 drives the card for multi-purpose using. Then, the stored data can be read at a distance "C" between the storage medium 457 and the optical head 62 by using a laser 61 accompanied with a splitter 63, a detector 65, and a transmission device 67. In this manner, the card for multi-purpose using employs the magnetic stripe 47, the IC chip 49 and the reading area 45 on one card.

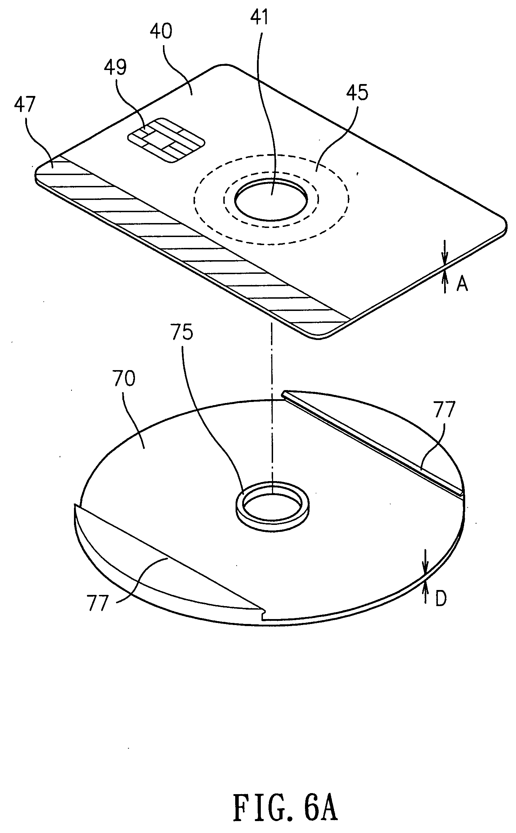

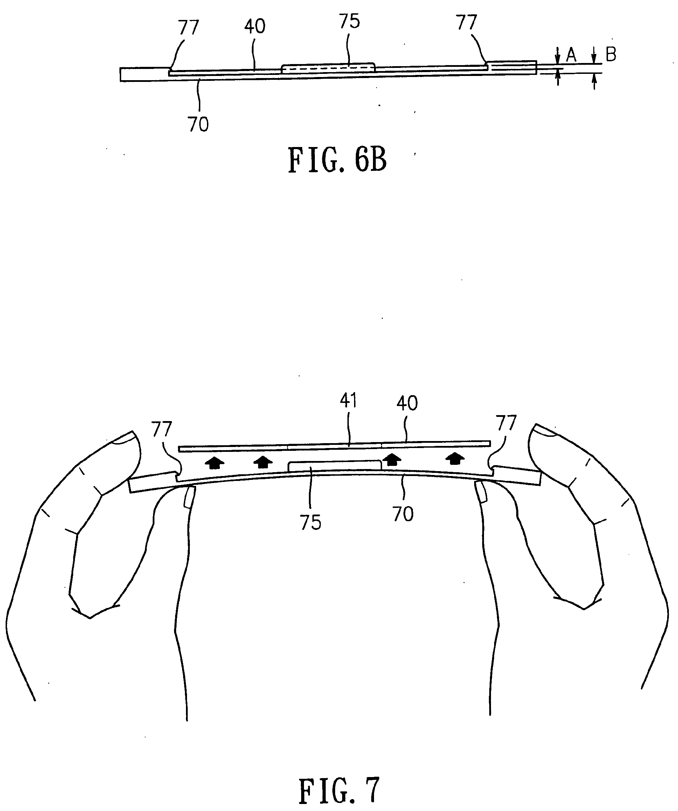

Furthermore, please refer to FIG. 6A and FIG. 6B, which represent a three-dimensional view and a cross-sectional view showing the structure of a card for multi-purpose using in accordance with another embodiment of the present invention. As shown in the drawings, the casing plate 70 is a transparent circular plate with a diameter of 80mm and a thickness of 0.4mm (D = B-A). In addition, two convex platforms 77 are provided on each side for positioning the card 40. In the center of the casing plate 70, there is a positioning member 75 corresponding to the aperture 41 of the card 40. The positioning member 55 fits in with the aperture 41 of the card 40. Therefore, the card 40 (with a thickness of A) can be stored fixedly on the casing plate 70 (with a thickness of D) so as to conform to the required thickness of 1.2mm (B). Therefore, the casing plate 70 with the positioned card 40 is able to be inserted into an optical driver and employs the magnetic stripe 47, the IC chip 49 and the reading area 45 on one card.

Please refer to FIG. 7, which is a schematic cross-sectional view showing the method for placing a card as shown in FIG. 6A in accordance with the present invention. As shown in the drawing, the casing plate 70 according to the present invention is made of flexible material so as to facilitate to place the card 40 onto the casing plate 70 and take out the card 40 from the casing plate 70. For example, when one wants to take the card 40 out from the casing plate 70, he only has to push aside the two convex platforms 77 so as to enlarge the distance between the two convex platforms 77 and make the casing plate 70 form a convex. In this manner, the card 40 will flip out.

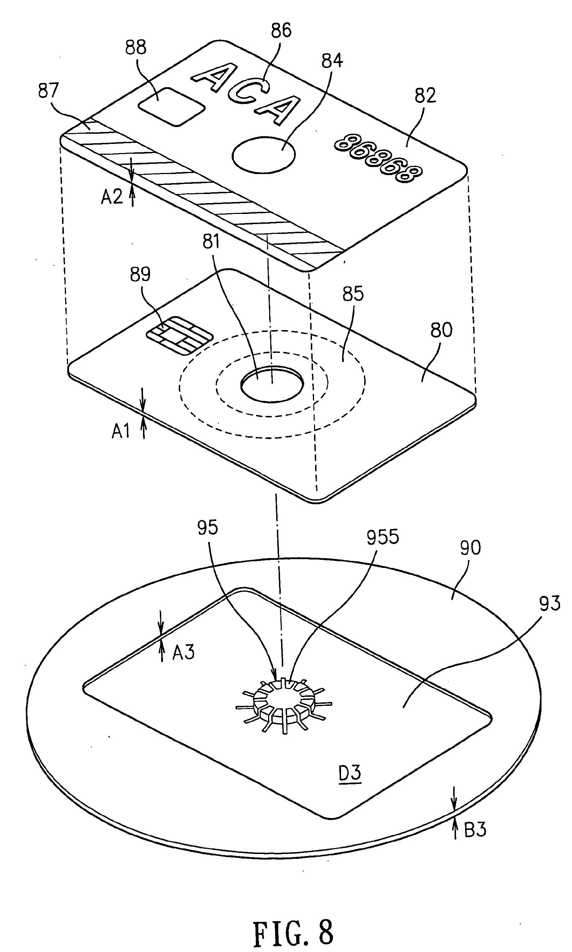

Furthermore, please refer to FIG. 8, which is an exploded view showing the structure of a card for multi-purpose using in accordance with another embodiment of the present invention. As shown in the drawing, the card for multi-purpose using according to the present invention comprises: a card 80, a card thin film (or laminate) 82 and a casing plate 90. On one surface of the card 80, there is provided at least one reading zone such as an IC chip 89 and a reading area of an optical disc 85. There is also provided an aperture 81 in the center of the card 80. Around the aperture 81 is the reading area 85, comprising a storage medium sandwiched between a transparent substrate and a protection layer. On the storage medium, there are also pits and lands. Furthermore, the casing plate 90 comprises a loading zone 93 for positioning the card 80. In the center of the loading zone 93, there is a positioning member 95 corresponding to the aperture 81 of the card 80. The positioning member 95 has a smooth top surface or a plurality of tooth-shaped units 955 so as to fit in with the aperture 81 of the card 80.

The present embodiment is characterized in that a card thin film 82 is attached to the surface of the card 80. On the surface of the card thin film 82, there are formed a magnetic stripe 87 and embossed patterns 86 such as words, numbers, symbols and combinations thereof. In order to match the corresponding card 80, there are provided on the card thin film 82 a positioning aperture 84 and an exposing window 88 for exposing the IC chip 89 of the card 80. For practical use, the magnetic stripe 87 and the embossed patterns 86 such as words, numbers, symbols and combinations thereof can be formed on the card thin film 82 before the card thin film 82 is attached to the surface of the card 80. In this manner, various embossed patterns 86 can be formed on the surface of the card 80 without causing any damage.

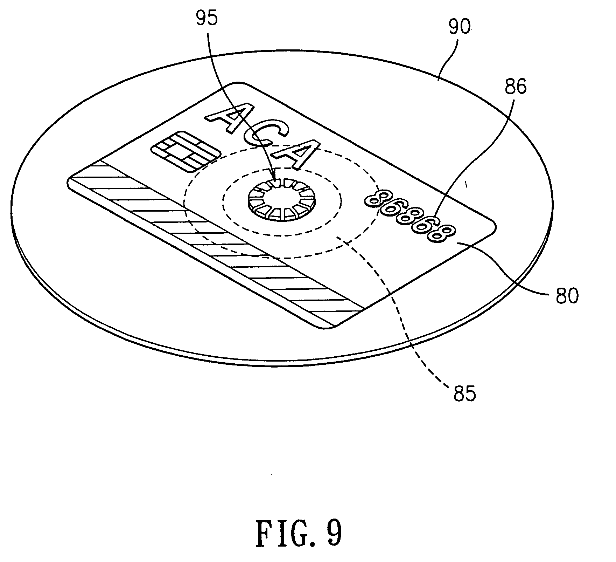

The sum of the thickness of the card 80 (A1) and the thickness of the card thin film 82 (A2) is about 0.8mm, which conforms to International Standard ISO 7816 (0.76mm ∼ 0.82mm). For example, the thickness of the card 80 (A1) is 0.6mm, while the thickness of the card thin film 82 (A2) is 0.2mm. Therefore, a card 80 attached with a card thin film 82 can be read by performing magnetic stripe swiping and/or IC chip accessing in a card reader so as to read the data stored in the magnetic stripe 87 or the IC chip 89. Apparently, the thickness of the loading zone 93 can be expressed as D3 = B3-A3, wherein B3 denotes the thickness of the casing plate 90 and A3 denotes the depth of the loading zone 93. In order to fit in with Compact Disc Digital Audio Standard known as "the ***Red Book,***" and Compact Disc Recordable (CD-R) Standard known as "the ***Orange Book,*** Part II", the sum of the thickness of the card 80 (A1) and the thickness of the loading zone 93 (D3) is determined to be about 1.2mm. For example, in the present embodiment, the sum of the thickness of the card 80 (A1) is 0.6 mm, while the thickness of the loading zone 93 (D3) is 0.6 mm. Therefore, when a card 80 attached with a card thin film 82 is stored fixedly in the loading zone 93 of the casing plate 90, the thickness of the reading area 85 could be 1.2mm by combining with the loading zone 93. In this manner, such a card for multi-purpose using can be inserted into and accessed by a conventional optical drive, as shown in FIG. 9.

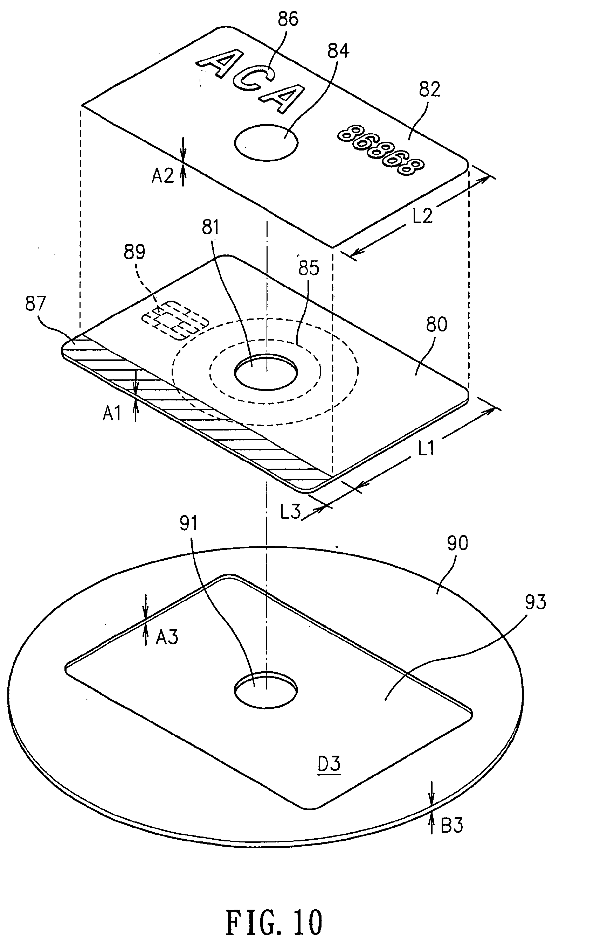

Please further refer to FIG. 10, which is an exploded view showing the structure of a card for multi-purpose using in accordance with a second embodiment of the present invention. As shown in the figure, the magnetic stripe 87 is formed directly on the surface of the card 80. In the present embodiment, the width of the card thin film 82 (L2) is smaller than (L1-L3), wherein L1 denotes the width of the card 80 and L3 denotes the width of the magnetic stripe 87. Therefore, the magnetic stripe 87 is formed aside the card thin film 82 as the card thin film 82 is attached to the card 80.

In accordance with practical use, the IC chip 89 and the reading area 85 can be formed on the same surface of the card 80. Furthermore, the loading zone 93 of the casing plate 90 is formed by excavation such that a card 80 attached with a card thin film 82 can be stored fixedly in the loading zone 93 of the casing plate 90. Therefore, a positioning member of the casing plate 90 can be implemented as type of the aperture 91.

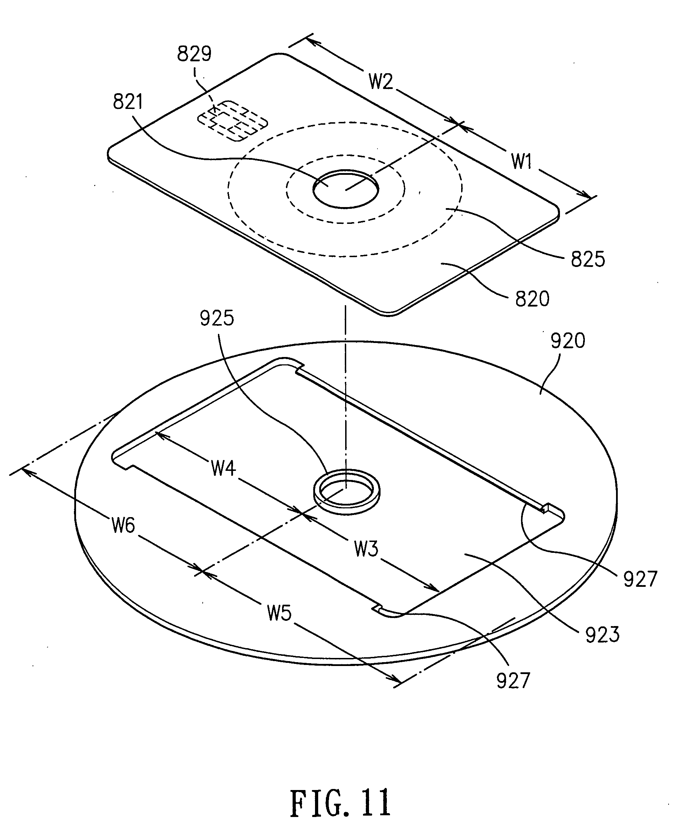

Furthermore, please refer to FIG. 11, which is an exploded view showing the structure of a card for multi-purpose using in accordance with a third embodiment of the present invention. As shown in the figure, the aperture 821 is disposed off-center on the card 820. In other words, the distance between the aperture 821 and one side edge (denoted by W1) is smaller than the distance between the aperture 821 and another side edge (denoted by W2). In the present embodiment, the IC chip 829 is formed on the side with larger space (with distance W2) of the card 820. Therefore, the reading area 825 around the aperture 821 is allowed to have a larger area and thus larger memory capacity. In addition, such a card for multi-purpose using is suitable for use in a slot-in card reader such that the aperture can be prevented from being stuck with the gear drive of the card reading device.

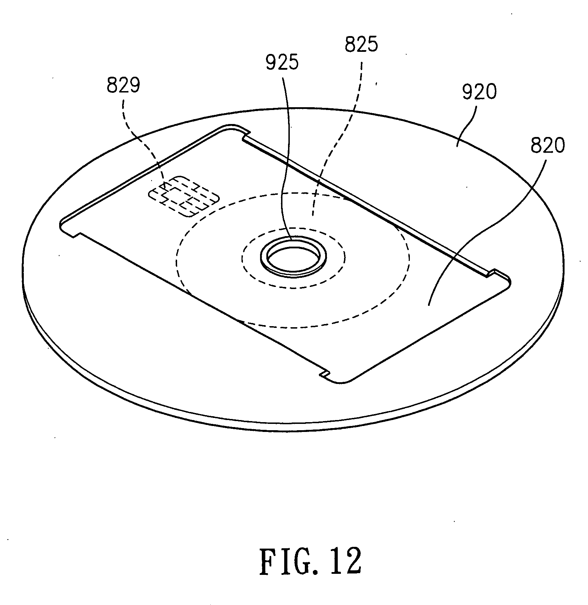

In the third embodiment of the present invention, the loading zone 923 is formed according to the card 820 by excavation on the casing plate 920. A center aperture or a positioning member 925 is formed on the loading zone 923. Particularly, the positioning member 925 is formed on the center position or the center-of-gravity position of the casing plate 920. In other words, for the casing plate 920, the distance between the positioning member 925 and one side edge (denoted by W5) is identical to the distance between the positioning member 925 and another side edge (denoted by W6). However, for the card 820, the distance between the positioning member 925 and one side edge of the loading zone 923 (denoted by W3) is smaller than the distance between the positioning member 925 and another side edge of the loading zone 923 (denoted by W4), which corresponds to the relation between W1 and W1. Furthermore, positioning columns 927 are formed on both side edges of the loading zone 923; therefore, a card 820 can be fixed or taken out from the casing plate 920 by bending the casing plate 920 inwards or outwards, as shown in FIG. 12.

Certainly, in the present embodiment, the sum of the thickness of the card 820 and the thickness of the casing plate 920 has to conform to the fore-mentioned ISO 7816 and Compact Disc Digital Audio Standard. Furthermore, a card thin film with embossed patterns or a magnetic stripe can also be attached to the surface of the card 820, similar to the card 82 as shown in FIG. 8. In addition, the positioning member 925 can be replaced by a positioning aperture. Alternatively, the shape of the casing plate, card as well as the card thin film is not limited to a round shape; instead, it can be round-like, rectangular-like, heart-shaped-like, polygonal, or cartoon-shaped-like.

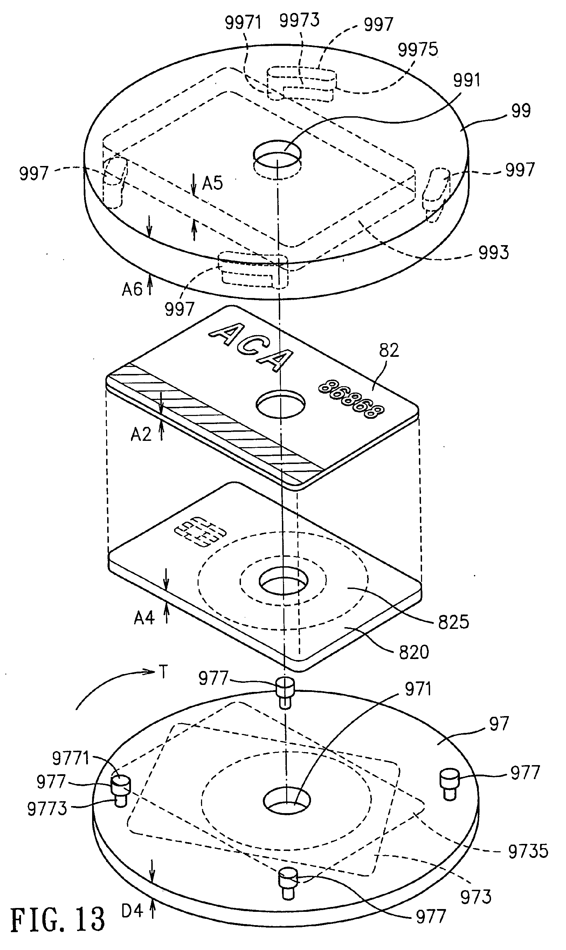

Please also refer to FIG. 13, which is an exploded view showing the structure of a card for multi-purpose using in accordance with a fourth embodiment of the present invention. In the present embodiment, a casing plate includes an upper casing plate set 99 and a bottom casing plate set 97. On the center position or the center-of-gravity position of the upper casing plate set 99, a center positioning aperture 991 is formed. A loading zone 993 for loading the card is formed on the upper casing plate set 99 by excavation according to the shape of the disc 820. The depth of the loading zone 993 is enough to load the card 820 with a card thin film 82 attached thereto. At least one positioning trough 997 is formed near the round edge of the upper casing plate set 99. The positioning trough 997 comprises a positioning fender 9975 such that the front end of the positioning shutter 997 forms an inlet 9971 without the fender and the rear end forms a channel 9973 blocked by the fender.

Moreover, the bottom casing plate set 97 is implemented by using a flat plate. On the center position of the bottom casing plate set 97, there is disposed a positioning aperture 971. Corresponding to each positioning trough 997 of the upper casing plate set 99, a positioning pillar 977 is disposed. The positioning pillar 977 is formed from an extended portion 9773 on the bottom casing plate 97 set with a mushroom top 9771, forming a T-shaped-like structure.

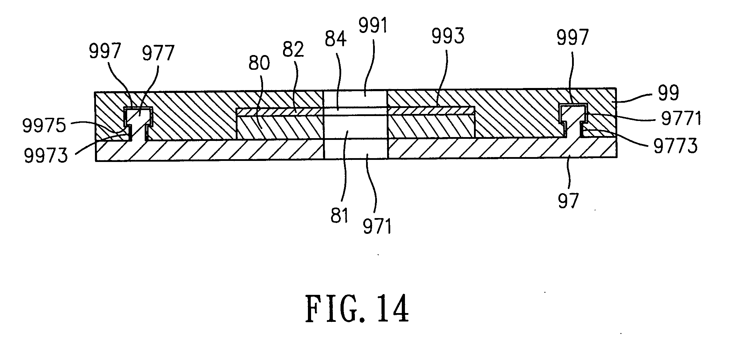

When one wants to access the data stored in the reading area 825 of an optical disc on the card 820,firstly, the card 820 is disposed in the loading zone 993 on the upper casing plate set 99. Then, the positioning pillar 977 on the bottom casing plate set 97 is connected to the corresponding positioning trough 997 for forming a coupling portion. The mushroom top 9771 of the positioning pillar 977 is inserted into the inlet 9971 of the positioning trough 997. Meanwhile, the longitudinal extending position of the card 820 is the pre-positioned loading zone 973 on the bottom casing plate set 97. Then, the upper casing plate set 99 or the bottom casing plate set 97 is moved along the direction as denoted by the arrow T such that the extended portion 9773 of the positioning pillar 977 is moved in the channel 9973. The mushroom top 9771 is blocked by the positioning fender 9975 such that the positioning pillar 977 can not be moved from the positioning trough 997. Therefore, the upper casing plate set 99 and the bottom casing plate set 97 are coupled together such that the card 820 is safely loaded in the loading zone 993. Meanwhile, the longitudinal extending position of the card 820 is the post-positioned loading zone 9735 on the bottom casing plate set 97, as shown in FIG. 14.

According to the present invention, the sum of the thickness of the card 820 (A4) and the thickness of the card thin film 82 (A2) conforms to the ISO 7816 standard. Furthermore, the sum of the thickness of the card 820 (A4) and the thickness of the bottom casing plate set 97 (D4) fits with the Red Book and the Orange book. For example, in one embodiment, the thickness of the upper casing plate set 99 (A6) is 1.2 mm, the depth of the loading zone 993 (A5) is 0.8mm, the thickness of the card thin film 82 (A2) is 0.2 mm, the thickness of the card 820 (A2) is 0.6mm, and the thickness of the bottom casing plate set 97 (D4) is 0.6 mm.

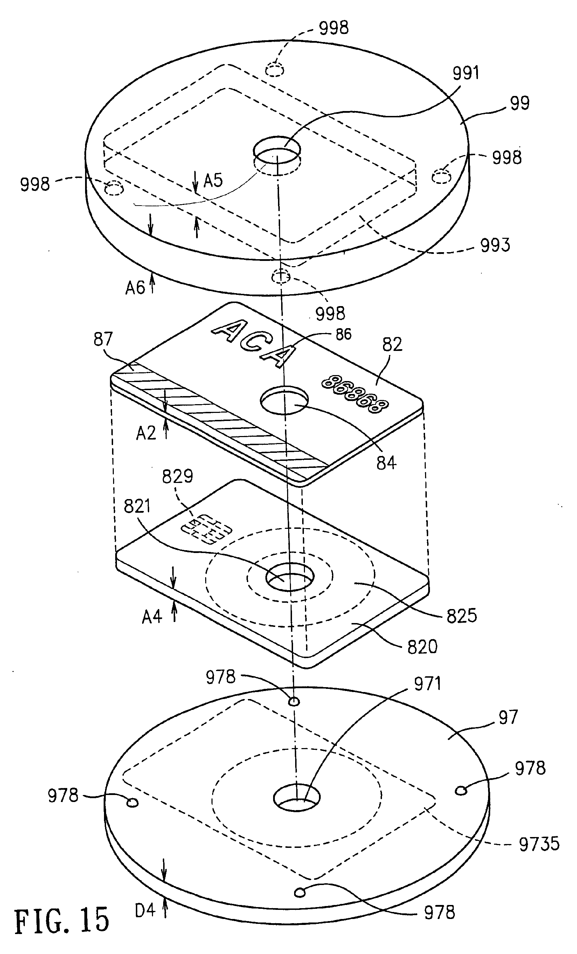

Finally, please refer to FIG. 15, which is an exploded view showing the structure of a card for multi-purpose using in accordance with a fifth embodiment of the present invention. As shown in the figure, the coupling portion of the positioning trough 997 and the positioning pillar 977 can be replaced by an easier structure. The positioning trough 997 is replaced by a positioning hole 998 and the positioning pillar 977 is replaced by a positioning gibbosity 978. the combination of the positioning hole 998 and the positioning gibbosity 978 can also achieve a coupled casing plate composed of an upper one and a bottom one.

Although this invention has been disclosed and illustrated with reference to particular embodiments, the principles involved are susceptible for use in numerous other embodiments that will be apparent to persons skilled in the art. This invention is, therefore, to be limited only as indicated by the scope of the appended claims.

## Claims

1. A card for multi-purpose using, comprising:
a card, comprising at least one reading zone, with a thickness making it able to pass in and out of a card reader; and
a casing plate, comprising two convex platforms on each side for positioning said card;
wherein said casing plate with said positioned card is able to be inserted into an optical driver.

2. The card as recited in claim 1, wherein said reading zone is one of a magnetic stripe, an IC chip, a reading area of an optical disc and combination thereof.

3. The card as recited in claim 1, wherein the thickness of said casing plate associated with said positioned card is equally a disc thickness following by Compact Disc Digital Audio Standard described as the Red Book and Compact Disc Recordable (CD-R) Standard described as the Orange book.

4. The card as recited in claim 1, wherein on said card there is provided a reading area, in the center of which there is an aperture fitting in a positioning member provided on said casing plate, and said positioning member has one of a smooth top surface and a plurality of tooth-shaped units.

5. The card as recited in claim 1, wherein said casing plate is made of a transparent flexible material.

6. A card for multi-purpose using, comprising:
a card, comprising at least one reading zone; and
a casing plate, comprising a transparent loading zone for positioning said card;
wherein the thickness of said casing plate associated with said positioned card is equally a disc thickness following by Compact Disc Digital Audio Standard described as the Red Book and Compact Disc Recordable (CD-R) Standard described as the Orange book.

7. The card as recited in claim 6, wherein said reading zone is one of a magnetic stripe, an IC chip, a reading area of an optical disc and combination thereof.

8. The card as recited in claim 6, wherein the thickness of said disc is in accordance with the specification of the ISO 7816.

9. The card as recited in claim 6, wherein the thickness of said card is 0.8mm and the thickness of said casing plate is 0.4mm.

10. The card as recited in claim 6, wherein on said card there is provided a reading area, in the center of which there is an aperture fitting in with a positioning member provided on said casing plate.

11. A card for multi-purpose using, comprising:
a card, including at least one reading zone;
a card thin film attached to one surface of said card, wherein the sum of combining the thickness of said card and the thickness of said card thin film is able to make said card with said card thin film to pass in and out of a card reader; and
a casing plate, including a loading zone for loading said card and attached said card thin film;
wherein said casing plate with said positioned card with said card thin film attached thereto is able to be inserted into an optical drive.

12. The card as recited in claim 11, wherein on said card thin film is disposed one of a magnetic stripe, words, numbers, symbols and a combination thereof.

13. The card as recited in claim 11, wherein a positioning aperture is disposed off-center on said card and another positioning aperture is disposed on said casing plate corresponding to the positioning aperture of said card.

14. The card as recited in claim 13, wherein on the center portion of said casing plate is disposed one of a positioning member and a positioning aperture.

15. The card as recited in claim 11, wherein the thickness of combining said casing plate and said positioned card fits for the Red Book and the Orange book.

16. The card as recited in claim 11, wherein said casing plate comprises:
an upper casing plate set, in which a loading zone is formed by excavation corresponding to said card fit for capable of loading said card; and
a bottom casing plate set, coupled with said upper casing plate set through a coupling portion, wherein the sum of combining the thickness of said bottom casing plate and the thickness of said card fits for the Red Book and the Orange book.

17. The card as recited in claim 16, wherein said coupling portion is selectively composed of one of a positioning trough, a positioning pillar, a positioning hole, a positioning gibbosity and combination thereof.

18. A card for multi-purpose using, comprising:
a card, including at least one reading zone and an positioning aperture disposed off-center; and
a casing plate, including a loading zone for positioning said card;
wherein the thickness of said casing plate with said positioned card conforms to the Red Book and the Orange book.

19. The card as recited in claim 18, further comprising a card thin film attached to one surface of said card, wherein on said card thin film is selectively disposed one of a magnetic stripe, words, numbers, symbols and a combination thereof.

20. The card as recited in claim 19, wherein the sum of combining the thickness of said card and the thickness of said card thin film fits in with ISO 7816.

21. The card as recited in claim 18, wherein the thickness of said card fits for ISO 7816.

22. The card as recited in claim 18, further comprising two convex platforms are disposed on both sides of said loading zone on said casing plate.

23. The card as recited in claim 18, wherein said casing plate comprises:
an upper casing plate set, in which a loading zone is formed by excavation corresponding to said card for capable of loading said card; and
a bottom casing plate set, coupled with said upper casing plate set through a coupling portion, wherein the sum of combining the thickness of said bottom casing plate and the thickness of said card fits for the Red Book and the Orange book.

24. A card for multi-purpose using, **characterized in that** a card on which is disposed a reading zone comprises one of a magnetic stripe, an IC Chip, a reading for an optical disc and a combination thereof.

25. The card as recited in claim 24, wherein a positioning aperture is disposed off-enter on said card.

26. The card as recited in claim 24, further comprising a card thin film attached to one surface of said card, wherein the sum of combining the thickness of said card and the thickness of said card thin film fits for ISO 7816.
